# EUROPEAN PATENT APPLICATION

(11) **EP 1 168 156 A2**
(43) Date of publication of application: **02.01.2002**
(21) Application number: 01202428.7
(22) Date of filing: 25.06.2001
(51) Int. Cl.: G06F 3/16

(54) **Wearable unit for remote speech control**

(30) Priority: 30.06.2000 US 215287 P; 12.10.2000 US 689346
(71) Applicant: ROBERT BOSCH GMBH, 70442 Stuttgart (DE)
(72) Inventor: Klausner, Markus, Wexford PA 15090 (US); Buergy, Christian, Pittsburgh PA 15217 (US); Rech, Wolf-Henning, D-75245 Neulingen/Boebrichen (DE)

(57) **Abstract**

A wireless, speech-controlled computer system is disclosed. The computer system utilizes a wearable control unit that has minimal circuitry to keep the device light-weight and inexpensive. The unit transmits an operator's speech and data by a wireless link to a remote host computer whereupon the actual processing of the speech and data signals, such as speech recognition, is performed. The remote host computer receives the speech (audio) signal and utilizes speech recognition to translate the operator's speech into commands the computer can utilize. In response to the received instruction, the computer can send back, via the wireless link, audio, and/or data signals. Upon receipt, the wearable control unit can provide information to the user through speaker(s) and/or a video monitor incorporated into the wearable control unit.

## Description

### Background of the Invention

### Field of the Invention

The present invention relates to wearable computer control systems. More specifically, the present invention relates to a system that allows hands-free control and access to one or more remote computer systems by a wearable control unit while utilizing a minimal amount of circuitry in the unit, minimizing weight and manufacturing costs of the unit.

### Related Art

The connection of a wearable computer to a mobile phone has been suggested (see U.S. Patent No. 5844824). Also, simultaneous transfer of data and voice over cellular phones exists in the prior art. GSM (Global System for Mobile Communications) allows transparent SMS (short message system) data transmission, and the GSM-based GPRS (General Packet Radio Service) allows for background email reception during phone calls.

Mobile computer systems and, in particular, hands-free wearable computers are known in the art (e.g., U.S. Patent No. 5844824: Hands-free portable computer and system). A drawback of these systems is that they are self-contained, i.e., mobile systems in the art comprise hardware necessary to run non-embedded software applications, such as interactive access to electronic service manuals. The hardware being contained in the mobile unit itself can cause its usage to be cumbersome for the operator.

Speech recognition software is also known in the art, and is used for interaction with computer systems as well as other devices.

Because of the foregoing problems, there is a need for a wearable computer control system that is light-weight, easy to wear, inexpensive, and is capable of transmitting/receiving audio and data signals simultaneously (in parallel).

### Summary of the Invention

A method and system are disclosed for a wearable, wireless, speech-controlled device that directs a remote host system. According to one embodiment, the remote host system utilizes hardware infrastructure for running speech-controlled software applications. At least one wearable control unit is communicatively linked to at least one remote host, such as a personal computer, workstation, or laptop computer, by a protocol such as Digital Enhanced Cordless Telecommunication (DECT).

The present invention can be significantly cheaper to manufacture than current wearable computers due to the minimal number of components required for the body-worn hardware. The wearable control unit need only contain minimal circuitry for the operation of the desired peripherals (i.e. video display processor, etc.). In contrast to prior art, no memory, central processing, or other actual computer functioning occurs within the wearable control unit. This occurs at the remote host system. When the operator speaks computer commands into the microphone (or other audio input device) of the wearable control unit, the audio signal is transmitted to the remote host using a protocol such as DECT. The speech is not translated into usable computer directives until it reaches a speech recognition system at the remote host. This further keeps the circuitry necessarily held at the wearable control unit to a minimum.

In one embodiment, the hardware includes a wireless communication chipset (DECT chipset); a speech input device and an audio output device, such as a headset with microphone and a speaker; a power supply with an optional recharger, such as battery-based power storage; and one or more peripherals for data visualization or collection, such as a display controller and display or a GPS receiver. By using DECT for linking the wearable control unit to the remote host computer, a real-time high-quality communication channel is provided employing all other advantages of the DECT protocol. For example, it is possible to have discrete communication pathways for audio and data. This can significantly improve sound quality as well as signal transfer rate. Other wireless technologies such as cell phones do not currently offer these advantages.

In the current embodiment, one or more wearable control units is connected to one or more remote hosts, on which the speech-controlled applications reside. A mobile user with the wearable control unit can move about unconstrained as long as the DECT chipset in the wearable control unit can maintain a wireless link to at least one DECT base station of the remote host. The DECT protocol enables a seamless hand-over between two base stations.

In this embodiment, speech is transmitted from the wearable control unit to the remote host using adaptive differential pulse code modulation (ADPCM), pulse code modulation (PCM), or any other high-quality speech coding method. As stated above, speech and data are transmitted on separate DECT channels. The data rate of the uplink speech channel (wearable control unit to remote host) is derived from the bandwidth requirements of ADPCM or PCM (32 kbit/s and 64 kbit/s, respectively). Several DECT channels could be bundled to achieve the desired data rate. The data rate of the downlink data channel (remote host to wearable control unit) is derived from the sending or receiving rate of the attached peripherals, such as display refresh rate, the display resolution, the number of text lines, and the number of characters per line of text.

### Brief Description Of The Drawings

Figure 1 shows a wireless, speech-controlled, computer system, according to an embodiment of the invention.
Figure 2 is a depiction of the components of computer system in Figure 1.

### Detailed Description

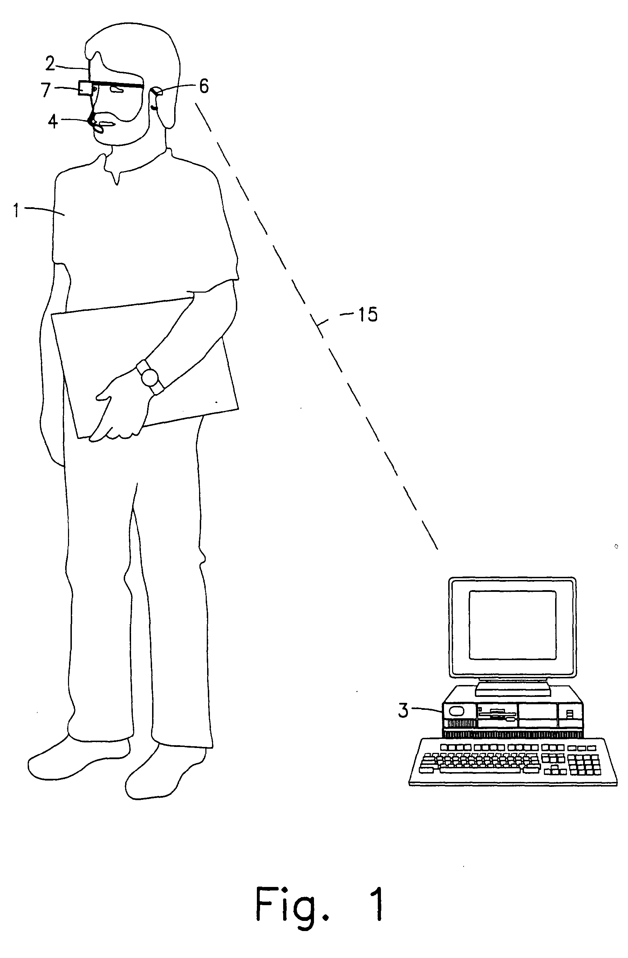

Figure 1 shows a wireless, speech-controlled, computer system, according to an embodiment of the invention. An operator 101 is shown wearing a "Wearable Speech and Data Control Unit" 102 (hereinafter referred to as the "wearable control unit" 102). The operator 101 is able to control various operations of a remote host computer 103 by giving voice commands into a microphone 104, which is connected to the wearable control unit 102. The commands given by the operator 101 are transmitted along a wireless linkage 105 from the wearable control unit 102, which contains a DECT chipset 109, to a DECT base station 108, which is connected to the remote host computer 103. The remote host computer 103 then receives the command, still in a speech format, and utilizes speech recognition software to translate the commands of the operator 101 into instructions that are understandable by the computer.

The remote host computer 103 performs the requested command(s) and sends back to the operator 101 appropriate data and/or audio signals. The wearable control unit 102 receives the audio signal and provides audio information to the operator 101 through one or more earphones 106. In addition, the wearable control unit 102 receives the data signal and provides information to the operator 101 through the video monitor 107 or another possible peripheral device.

The system could be utilized for many different applications. One use for the system involves data retrieval for automotive mechanics. A mechanic 101 performing mechanical repairs would be able to access electronically-stored repair manuals with the aid of a wearable control unit 102 wirelessly linked to a remote host computer 103. The mechanic 101 would be able to move freely around the vehicle without constraints and with both hands free while accessing large quantities of information through requests made by speech or with another peripheral device.

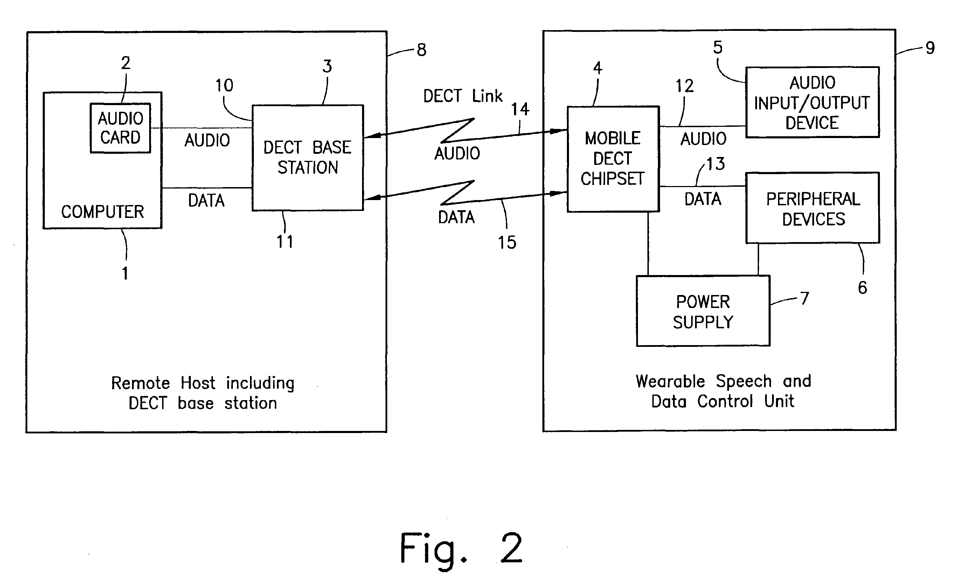

Figure 2 is a block diagram of the present invention. A "Wearable Speech and Data Control Unit" 209 (hereinafter referred to as the "wearable control unit" 209) is shown connected via a DECT link to a hardware assembly, the "remote host computer including a DECT base station" 208 (hereinafter referred to as the "remote host" 208). The remote host 208 comprises a computer 201, such as a personal computer, a workstation, a laptop, a subnotebook, or a self-contained wearable computer. The computer 201 contains an audio card 202, connected to a DECT base station communication chipset (DECT Fixed part) 203 with a separate audio port 210. In one embodiment of the present invention, an RS232 port of the computer is connected to a data port 211 of the DECT base station 203, while the audio card 202 is connected to the audio port 210 of the DECT base station 203. Another foreseen implementation of the present invention includes utilizing a common USB (Universal Serial Bus) port, which would also provide simultaneous voice (real isochronic) and data transmission.

The DECT base station 203 establishes and maintains a wireless link with at least one mobile DECT communication chipset (DECT Portable Part) 204, which includes a speech codec that can encode/decode ADPCM and/or PCM. Like the DECT base station 203, the mobile DECT chipset 204 has a separate audio port 212 and data port 213. The wireless link between remote host 208 and wearable control unit 209 uses a separate audio channel 214 and data channel 215, which are not necessarily physically separate. Both the audio channel 214 and the data channel 215 are duplex in this example. The audio channel 214 is a 32 kbit/s channel if ADPCM is used and a 64 kbit/s channel if PCM is used. An audio input/output device 205 such as a headset with earphone and microphone is connected to the audio port 212 of the mobile DECT communication chipset 204. The data port 213 of the mobile DECT communication chipset 204 is connected to one or more peripherals 206 for data visualization or collection, such as a display controller that controls an arm-worn or head-worn display, a GPS receiver, or a bar code scanner. A power supply 207 provides the power for the mobile DECT communication chipset 204 and optionally for the one or more peripherals 206 such as the display controller with display.

The wearable control unit 209 in Figure 2, comprising the mobile DECT communication chipset 204, the audio input/output device 205, one or more peripherals 206, and the power supply 207 can be implemented in one or more physical parts. For example, the one or more peripherals 206 could constitute one or more physical parts of the mobile assembly that is connected to a belt-worn housing comprising the mobile DECT communication chipset 204 and the power supply 207. The audio input/output 205 could be a headset consisting of earphone(s) and microphone connected to the belt-worn housing containing the mobile DECT chipset 204 and the power supply 207. In this case, the mobile assembly would include three or more interconnected physical parts. The connection of these three or more parts could be wired or wireless.

Speech input by the user wearing the wearable control unit 209 is transmitted on the audio channel 214 to the audio card 202 of the computer 201. Speech recognition software on the computer 201 interprets the speech input by the user. Simultaneously, peripherals attached to the wearable control unit 209 send data via the data channel 215 to the remote host 208. Speech-controlled applications using speech recognition software react to the speech and data input by sending appropriate audio messages via the audio channel 214 and data messages via the data channel 215 back to the wearable control unit 209. Examples for these data messages are characters and graphics sent to a peripheral display 206 via the data channel 215, and text-to-speech feedback transmitted on the audio channel 214.

A sample scenario involves an inspector collecting field data. The inspector, wearing a wearable control unit 209, announces collected data or information into a microphone 205 via the audio channel 214 to the application running on the remote host 208 located in a vehicle. A peripheral GPS receiver 206 sends geographical data via the data channel 215 to the application. Next, the application reacts with audio feedback via the audio channel 214 to the inspector's earphone(s) 205 and visual feedback via the data channel 215 to a display 206.

Another foreseen embodiment involves the utilization of a "mobile" remote host. All of the processing ability contained in the remote host 208 described above could be contained in a *wearable* remote host unit 208. Further, it is contemplated that *multiple* operators 101 (See Figure 1) could be linked to a single remote host 208 or single mobile remote host 208 through each operator's 101 wearable control unit 209.

Although several embodiments are specifically illustrated and described herein, it will be appreciated that modifications and variations of the present invention are covered by the above teachings and within the purview of the appended claims without departing from the spirit and intended scope of the invention.

## Claims

1. An apparatus for remote speech control of a remote host system, comprising:
a portable transmission unit capable of transmitting a transmitted audio signal to a remote host system over a wireless medium, where
the transmitted audio signal is created from speech of the operator of the portable transmission unit
the remote host system is capable of receiving the transmitted audio signal over the wireless medium and being controlled by the transmitted audio signal; and
where
the transmitted audio signal is processed and converted at the remote host system into instructions which are understandable by the remote host system in order to control the remote host system.

2. The apparatus of claim 1, wherein the portable transmission unit is capable of receiving a received audio signal from the remote host system over the wireless medium.

3. The apparatus of claim 1, wherein the portable transmission unit is capable of transmitting a transmitted data signal and is capable of receiving a received data signal.

4. The apparatus of claim 1, wherein the remote host system is capable of being controlled by the transmitted data signal.

5. The apparatus of claim 2, wherein the transmitted audio signal and the received audio signal are transmitted and received independent of the transmitted data signal and the received data signal.

6. The apparatus of claim 1, wherein the portable transmission unit utilizes an audio reception device, such as a microphone, in creation of the transmitted audio signal.

7. The apparatus of claim 2, wherein the portable transmission unit utilizes an audio delivery device, such as a speaker, to deliver audio output from the received audio signal to the operator of the portable transmission unit.

8. The apparatus of claim 3, wherein the transmitted data signal is created from a data entry device, such as a keyboard.

9. The apparatus of claim 3, wherein the received data signal is delivered to the operator of the portable transmission unit by an information delivery device, such as a video monitor.

10. The apparatus of claim 3, wherein the transmitted audio signal and the transmitted data signal are transmitted from the portable transmission unit to the remote host system by one or more digital enhanced cordless telecommunication (DECT) chipsets and the received audio signal and the received data signal are received by the portable transmission unit from the remote host system by one or more digital enhanced cordless telecommunication (DECT) chipsets.

11. A method for remote speech control of a remote host system, comprising:
transmitting a transmitted audio signal from a portable transmission unit to the remote host system over a wireless medium;
receiving by the remote host system the transmitted audio signal over the wireless medium;
controlling the remote host system by the transmitted audio signal;
creating the transmitted audio signal from speech of the operator of the portable transmission unit; and
converting the transmitted audio signal at the remote host system into instructions which are understandable by the remote host system in order to control the remote host system.

12. The method of claim 11, further comprising:
receiving by the portable transmission unit a received audio signal from the remote host system over the wireless medium.

13. The method of claim 11, further comprising:
transmitting by the portable transmission unit a transmitted data signal; and
receiving by the portable transmission unit a received data signal.

14. The method of claim 11, further comprising:
controlling by the transmitted data signal the remote host system.

15. The method of claim 12, further comprising:
transmitting and receiving the transmitted audio signal and the received audio signal independently from the transmitting and receiving of the transmitted data signal and the received data signal.

16. The method of claim 11, further comprising:
utilizing by the portable transmission unit an audio reception device, such as a microphone, in creation of the transmitted audio signal.

17. The method of claim 12, further comprising:
utilizing by the portable transmission unit an audio delivery device, such as a speaker, to deliver audio output from the received audio signal to the operator of the portable transmission unit.

18. The method of claim 13, further comprising:
creating from a data entry device, such as a keyboard, the transmitted data signal.

19. The method of claim 13, further comprising:
delivering the received data signal to the operator of the portable transmission unit by an information delivery device, such as a video monitor.

20. The method of claim 13, further comprising:
transmitting the transmitted audio signal and the transmitted data signal from the portable transmission unit to the remote host system by one or more digital enhanced cordless telecommunication (DECT) chipsets; and
receiving the received audio signal and the received data signal by the portable transmission unit from the remote host system by one or more digital enhanced cordless telecommunication (DECT) chipsets.
